# EUROPEAN PATENT SPECIFICATION

(11) **EP 1 900 575 B1**
(45) Date of publication and mention of the grant of the patent: **07.04.2010**
(21) Application number: 07425548.0
(22) Date of filing: 31.08.2007
(51) Int. Cl.: B60R 19/00

(54) **Safety bar, particulary for industrial vehicles**
Sicherheitsstange insbesondere für Industriefahrzeuge
Barre de sécurité en particulier pour véhicules industrielles

(30) Priority: 06.09.2006 IT RM20060470
(43) Date of publication of application: 19.03.2008
(73) Proprietor: Takler S.r.l., 75100 Matera (IT)
(72) Inventor: Lorusso, Lorenzo, 75100 Matera (IT)
(74) Representative: Iannone, Carlo Luigi

(56) References cited:
- DE-A1- 4 017 160
- US-A- 4 320 913
- US-A- 4 671 550
- US-A1- 2003 111 851

## Description

The present invention concerns a safety bar, particularly for industrial vehicles.

More specifically, the invention relates to a bar for realising structures, such as safety structures or containment devices for instable goods, particularly, but not exclusively, on industrial vehicles, such as trucks, trailers or semi trailers, particularly studied and realised for permitting a high resistance to the mechanical (static and dynamic) stresses and to be less subject to permanent deformations in case of collisions or of loads applied according to a transverse direction.

As it is well known, particularly industrial vehicles are provided with suitable safety fittings and setting up.

Safety lateral protections, compulsory within the European Community, are included among these setting up, said protections aiming preventing that cycles, motorcycles or other bodies slip, in case of road accident, under the shape of said industrial vehicle, and particularly within the space between wheels.

It is in fact known that road and highway safety within the whole European Community requires setting up able to limit risks and damages due to road accidents. This requisite is established by many harmonised Directives and Rules at a European level, such as the one relevant to the safety rules No. 89/297/CE.

Typically, industrial vehicles (e.g. trailers or semi-trailers for tyre transportation) comprise a very rigid structural frame comprised of steel beams. Load to be transported is placed on the portion above said beams, contained within bodies or frames, comprised of rigid side boards.

For industrial vehicles with reduced dimensions, structural frame is the same frame of tractor, and it is usually connected by a suitable snood and positioned above the wheels. Thus, said load remains in a rather high position.

Space between the wheels of said vehicle is typically empty, or it is used for storing materials, tool cases, fire extinguishers, wedges and other devices (e.g. compressors for vans provided with isothermal bodies, pallets supports, wheel support, ecc.).

Case studies of road accidents occurred in the European territory demonstrated that cycles or motorcycles tend to go within said empty space among the wheels of the industrial vehicle. This is mainly fatale for cycles or motorcycles drivers.

Therefore, it is necessary providing the industrial vehicles with a robust and insurmountable barrier in the lower part of trailers and semi trailers. Particularly, it is necessary that space existing between the vehicle wheels is inaccessible for cycles and motorcycles both while circulating and in case of road accident.

To this end, presently exist available on the market different kind of lateral protections, known as "bicycle protection barriers". Most common configuration for a lateral protection presently used by industrial vehicles setting up and manufacturers (MAN, lveco, Renault, Volvo, Scania, DAF, ecc.) provides two aluminium extruded bars, placed horizontally between the wheels according to the longitudinal extension of the vehicle and fixed to the frame by a corresponding number of zinc plated steel or stainless steel sheet uprights. Uprights directly coupled with the vehicle structural frame by removable couplings (screws and nuts) have on their surface a series of slots through which it is possible anchoring the horizontal barriers, being it possible adjusting their distance.

These barriers, notwithstanding are efficient in case of accident, do not have a high mechanical resistance. This is critical in case of particularly violent accident.

Moreover, commercial aluminium barriers do not have a sufficient elasticity and deform also in case of light accidents. Therefore, it is often necessary replacing the same.

Finally, the above barriers have drawbacks also under the manufacturing point of view. In fact, different cutting and assembling operations are necessary for their realisation, with an evident increase of their final costs.

Always taking in consideration the sector of the industrial vehicles, as already said, bodies are employed for loading goods within industrial vehicles, typically comprised of a structure made up of uprights and transverse elements coupled each other.

Usually, said bodies have a bearing structure comprised of four uprights placed at the ends of the frame and a series of transverse elements delimiting their space.

Side boards are mounted within said bearing structure, comprised of other uprights and transverse elements, aiming at closing the loading space. Goods are stored within said bodies, directly connected to the frame of the industrial vehicle.

As it is well evident, it is necessary delimiting a goods loading space by a rigid and robust structure. Part over the structural frame of trailers, semi trailers, vans, ecc is the one destined to receive the load. Moreover, different kind of goods make it necessary a structure able to make the goods "containment and protection" functions during its transportation.

Structures for containing goods must be completely or partially dismountable so as to open wide openings for loading and unloading goods.

Said structure of industrial vehicle bodies is presently comprised of a steel section bars or aluminium extrusions frame. More specifically, starting from a base, also known as flatcar, represented by the upper portion of the frame of industrial vehicle or trailers or semi trailers, on which different uprights are mounted, generally at least four, provided at the ends of said flatcar. On the basis of the kind of load and of the stiffness requirements of the vehicle walls, it is possible mounting other uprights so as to reduce the distance between centres of the same.

Transverse elements or "side boards" are placed between the above mentioned uprights, creating the real lateral wall of the vehicle. These steel or anodised aluminium section bars transverse elements are usually inserted within pockets or seats and fixed at their ends on said uprights.

In case side boards are comprised of steel, fixing to the uprights can be realised by fixed joint (movable coupling), or they ate welded on uprights (fixed coupling) on the basis of the specific requirements. In case side boards or barrier are comprised of anodized aluminium extruded elements, they are coupled by fixed joint with uprights and each other.

Transverse elements and uprights realise a structure and in some cases (movable couplings) it is possible dismounting wide barriers (side boards) to make it easier loading and unloading operations.

Presently available structures described in the above have structural and manufacturing problems concerning the above safety barriers. Moreover, they often are not characterised by a sufficient resistance to the static mechanical stresses.

A further example of safety bar is known from patent US 4,320,913, corresponding to the preamble of claim 1 which discloses a bar comprising an elongated bumper body, which includes an outer layer formed of synthetic resin material by extrusion molding and an absorbing internal central bumper portion disposed internally of the outer layer, the internal central bumper portion has a plurality of axial bores and web portions.

A disadvantage with the devices known from the state of the art, is that they do not provide with a bar having a wider protecting surface and, at the same time, having a high resistance with respect to shocks.

In view of the above, it is object of the present invention that of suggesting a safety bar suitable both to contain goods (bodies), and to realise protections for making it possible that other bodies, such as cycles, motorcycles and like penetrate through the vehicle shape, mainly in its lower part, in case of accident.

It is therefore specific object of the present invention a safety bar, particularly for industrial vehicles, **characterised in that** it comprises a metal section bar, and a plastic material box-type body, said box-type body having a seat, realised along its main extension, within which said section bar can be inserted.

Always according to the invention, said section bar can have a substantially "C" shaped, or "Ω" shaped section, or a box-type section.

Still according to the invention, said box-type body can be realised by extrusion.

Preferably, according to the invention, said plastic material can be polypropylene or polivinilchloride (PVC).

Advantageously, according to the invention, said section bar can be comprised of zinc plated steel or of stainless steel.'

Always according to the invention, said box-type body can comprise two channels, realised laterally with respect to said seat.

Still according to the invention, said bar can comprise means for coupling with supports.

Furthermore, according to the invention, said bar can have a slot extending along its main direction, or holes, said slot or said holes permitting application of said means for coupling with possible supports to said section bar.

Still according to the invention, said means for coupling with supports can comprise a small block, to be inserted within said section bar, having a seat in which the head of a screw and a washer can be placed, said screw projecting from said slot or holes when said small block is inserted in said section bar.

It is further object of the present invention the use of the above bar for realising side boards or structures for bodies for containing goods to e transported by said industrial vehicles.

It is further object of the present invention a lateral protection for an industrial vehicle comprising at least one upright, with a plurality of slots along a surface; a bracket that can be coupled with said at least one upright, in correspondence of one of its ends, and with the frame of said industrial vehicle; and one or more bars coupled with said at least one upright through said slots, said one or more bars being provided laterally with respect to said industrial vehicle toward its longitudinal direction and each other substantially parallel, so as to obstruct the empty space under said industrial vehicle, characterised in that said one or more bar are as defined in the above.

Always according to the invention, said one or more bars can be coupled with said at least one upright by coupling means.

Still according to the invention, said protection can comprise two uprights.

Furthermore, according to the invention, said brackets can be fixed to said vehicle by a pair of screws and nuts.

Advantageously, according to the invention, the position of said at least one upright and the corresponding bracket can be adjusted.

The present invention will be now described, for illustrative but not limitative purposes, according to its preferred embodiments, with particular reference to the figures of the enclosed drawings, wherein:
figure 1 shows a perspective view of a safety bar, particularly for industrial vehicles, according to the invention;
figure 2 shows an exploded perspective view of an assembly for coupling the bar according to figure 1;
figure 3 shows a perspective view of the coupling assembly of figure 2;
figure 4 shows a perspective view of a first section bar of bar according to figure 1;
figure 5 shows a perspective view of a further embodiment of box-type body of the bar of figure 1;
figure 6 shows a lateral view of a truck with a lateral protection comprising the bar according to the invention;
figure 7 shows a lateral view of a trailer with a lateral protection comprising a bar according to the invention;
figure 8 shows a lateral view of a semi trailer with a lateral protection comprising a bar according to the invention;
figure 9 shows a perspective view of an upright for coupling bars according to the invention;
figure 10 shows a lateral section view of a upright according to figure 9;
figure 11 shows an exploded view of an upright according to figure 9;
figure 12 shows a front view of a protection comprising the bar according to the invention;
figure 13 shows a lateral view of a first industrial vehicle with side boards comprising the bar according to the invention;
figure 14 shows a lateral view of a second industrial vehicle with side boards comprising the bar according to the invention; and
figure 15 shows a top view of the industrial vehicle according to figure 14.

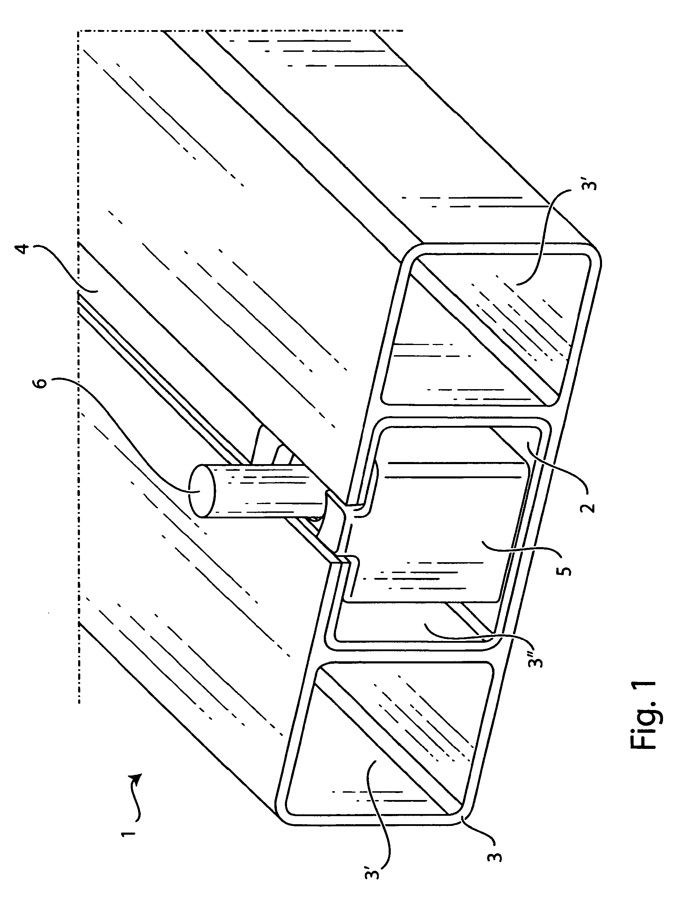

Making reference to figure 1, it is noted a bar 1 for safety structures for industrial vehicles.

Said bar 1 comprises a first section bar 2 completely inserted within a box-type body 3.

Said first section bar 2 is comprised of metal, preferably zinc plated steel or stainless steel. In the present embodiment, section of said first section bar 2 is substantially "C" shaped, but other possible embodiments are for example Ω shaped sections, H shaped section or box-type section.

Box-type body 3 is comprised of plastic material, preferably polivinilchloride (PVC) or polypropylene and comprises two open lateral channels 3' and an open seat 3", between said two channels 3', suitable to house said section bar 2.

When said section bar 2 is inserted within said seat 3" of said box-type body 3, it is observed a slot 4 on said bar 1, within which coupling means can be introduced, so that said bar 1 can be fixed to possible supports.

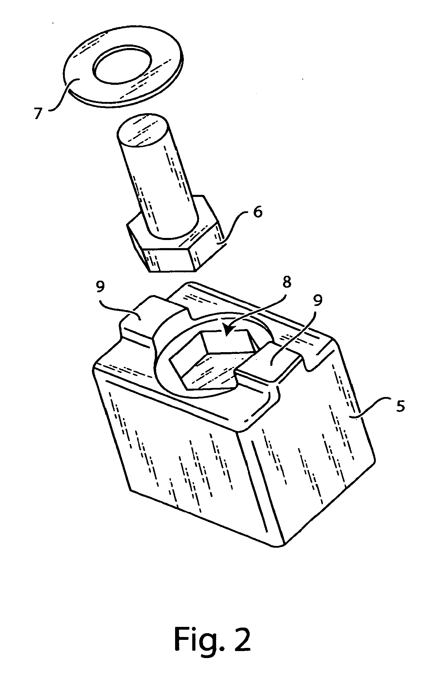

In the embodiment shown in figure 1, said coupling means are comprised of an assembly comprising (see also figure 2) a small block 5, a hexagonal screw 6 and a washer 7.

As it can be observed, said small block 5 has a parellepiped shape, and has a cavity 8 on one face, within which the head of said screw 6 can be housed, and some projections 9.

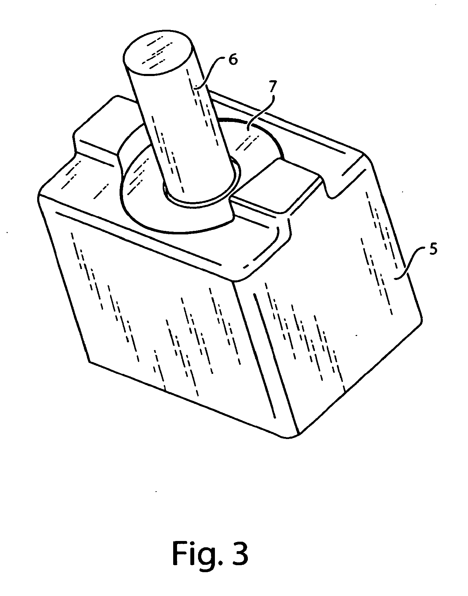

Coming back to figure 1, small block 5 is apt to be inserted within the inner channel of the section bar 2. Projections 9, entering within the slot 4, permit preventing rotation each other between bar 1 and small block 5. figure 3 shows assembly comprising small block 5, bar 6 and washer 7.

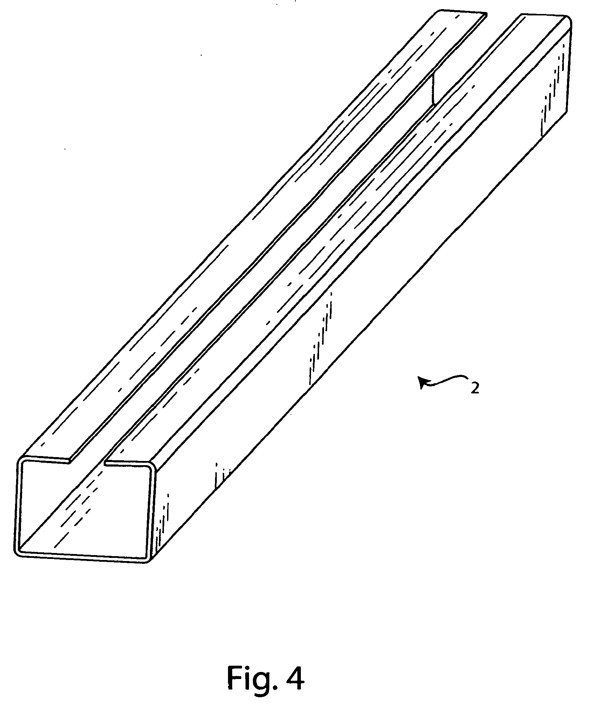

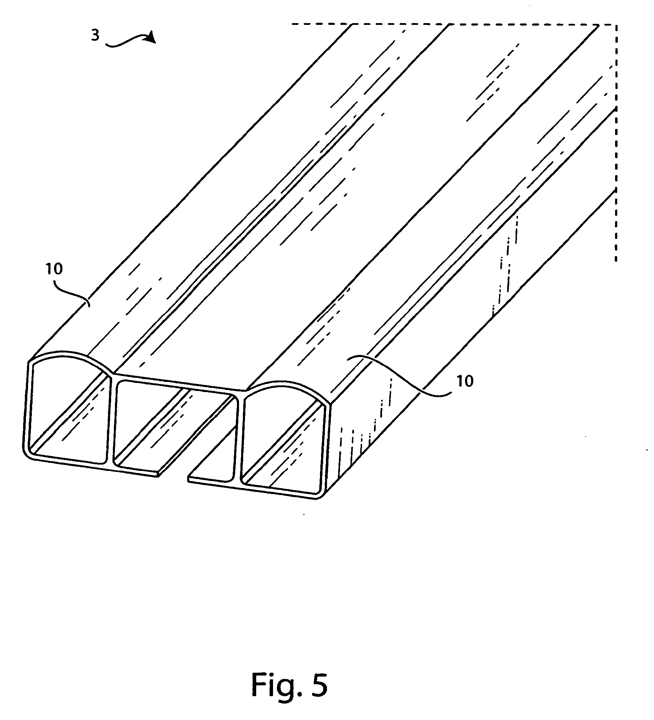

Figures 4 and 5 show, respectively, first "C" shaped section bar 2 and a further embodiment of box-type body 3, wherein the two closed lateral channels 3' have rounded surfaces 10.

Stee! core of bar 1 according to the invention, realised by section bar 2, confers to the structure a higher elasticity and mechanical resistance with respect to similar aluminium solutions, and many cases also with respect to equivalent steel solutions.

Further, with respect to the known solutions, said bar 1 has a larger efficient surface, due to the surface of the box-type body 3.

When said box-type body 3 receives, for example, a shock, it distributes all energy on said first section bar 2 that, being comprised of steel, on one hand permits better supporting shock, and on the other hand to deform less than the known solutions, maintaining the elastic properties.

As already said, bar 1 according to the invention can be used for different safety setting up of industrial vehicles. Among these setting up, said bar 1 can be used for realising lateral protections (or cycle barriers) for closing the empty space between axis of the vehicle wheels of industrial vehicles such as trucks, trailers or semi trailers.

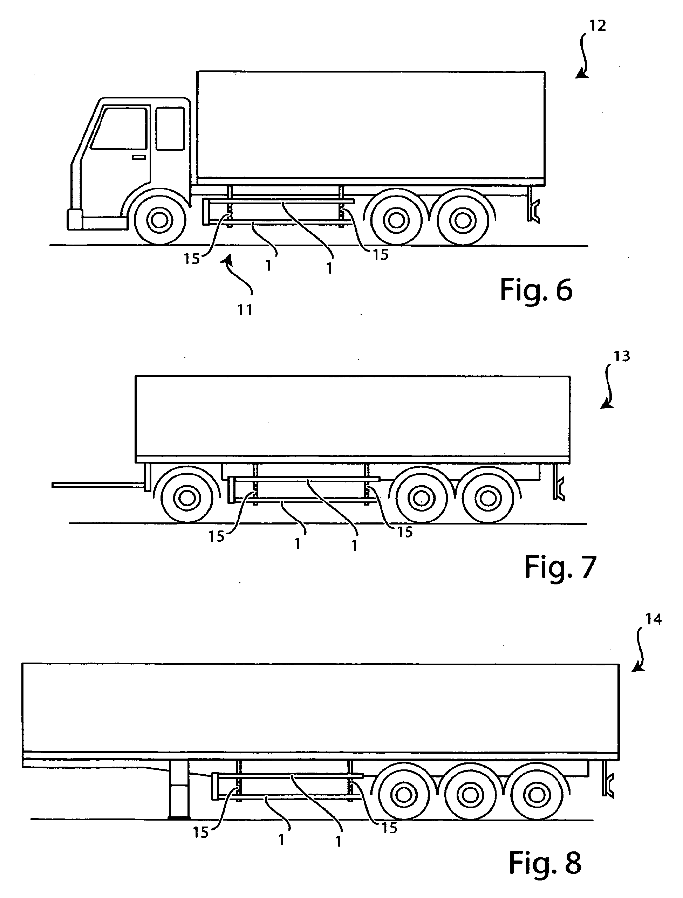

Making reference to figures 6 - 8, it is possible observing a lateral protection 11, comprised of bars 1 according to the present invention, respectively installed on a truck 12, a trailer 13 or on a semi trailer 14.

Lateral protection 11 is placed, as shown in figures 6-7, between axes of front wheels and rear wheels, while in figure 8 it is placed in front of the rear wheels, and in any case so as to protect the empty space under the industrial vehicle.

Said lateral protection 11 comprises, with respect to the prior art, two or more bars 1 according to the invention in lieu of the standard aluminium beams.

Examining in greater detail figures 6 - 8, it is observed that said lateral protections 11 are comprised of two bars 1, placed horizontally between the wheel axes in the longitudinal direction of the industrial vehicle 12, 13 or 14, and anchored to the frame of said vehicle by uprights 15, made up of zinc plated steel or stainless steel sheet.

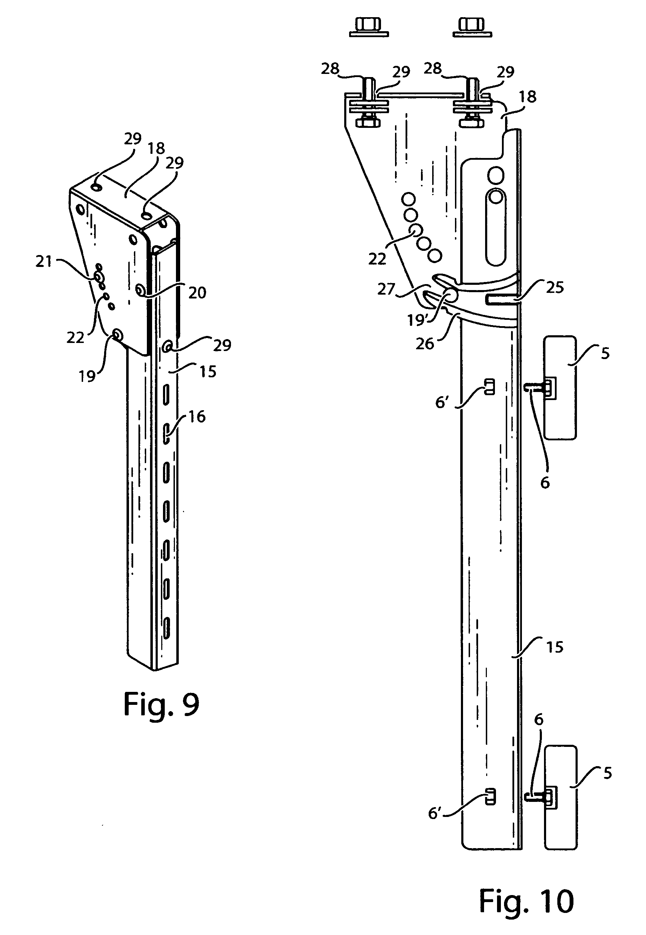

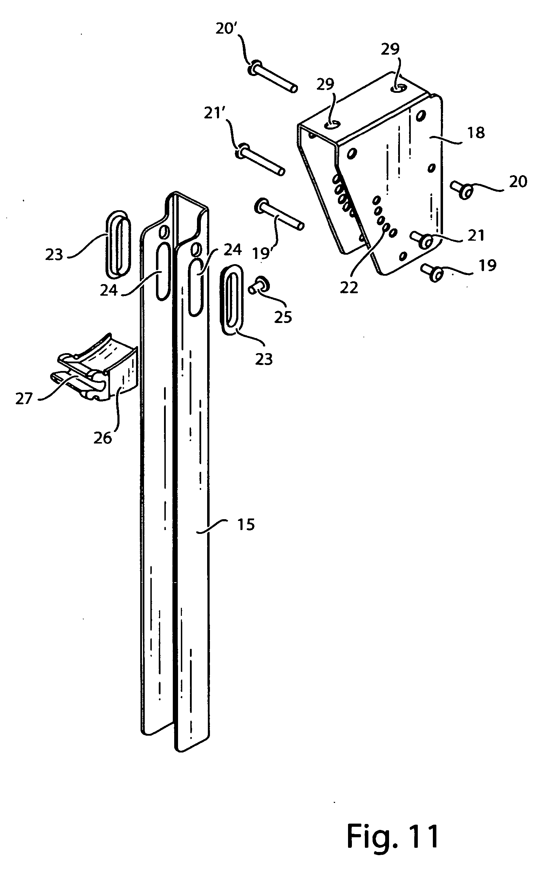

Figures 9-11 show an upright 15 having a plurality of slots 16 for fixing the same at the bars 1 by small blocks 5, having screws 6 and nuts 6'.

Upright 15, that in the present embodiment is a "U" shaped beam, can be fixed to a support bracket 18 by screws 19, 20, 21 and relevant pins 19', 20', 21'.

Rotation of said upright 15 with respect to said bracket 18 can be adjusted. To this end, the latter has a plurality of holes 22, in which screw 21 and relevant pin 21' can be introduced.

Bushings 23 are connected with the upright 15, that can be placed within suitable cavities 24 realised on the lateral surface of said upright 15. said bushings 23 are apt to realise a gasket between said upright 15 and said bracket 18.

Finally, an elastic element 26 can be fixed within said upright 15 by a screw 25, said elastic element 26 having a groove 27 within which pins 19' or 20' can be housed.

Said support bracket 18 can be fixed to the industrial vehicle frame 12, 13 or 14 by screws 28 and relevant nuts, that can be inserted within the holes 29 realised above the same bracket 18.

Also distance between bar 1 can be adjusted, choosing slots 16 on which screws 6 can be fixed.

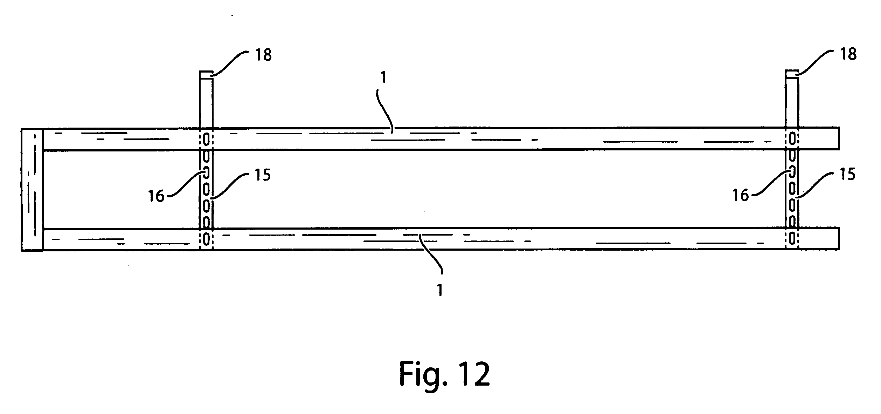

Figure 12 shows a lateral protection 11 comprising slots 16 on which bars 1 are fixed. Said uprights 15 are also fixed to the brackets 18.

Being said box-type body 3 comprised of plastic material, it can be manufactured so as to have a most pleasant aspect, being it possible shaping its profile or colouring it with the same colour of the industrial vehicle.

It is possible realising body side boards by said bars 1, obtaining remarkable advantages with respect to the use of standard aluminium or steel beams. In fact, in case, for example, the body is not properly fixed or subjected to a shock, bars 1, even deforming, tend to spring back to the original shape after their intervention, thanks to the mechanical properties of better resistance to static loads and better elasticity.

Moreover, box-type element 3 can be so width to permit a better protection and resistance of the body.

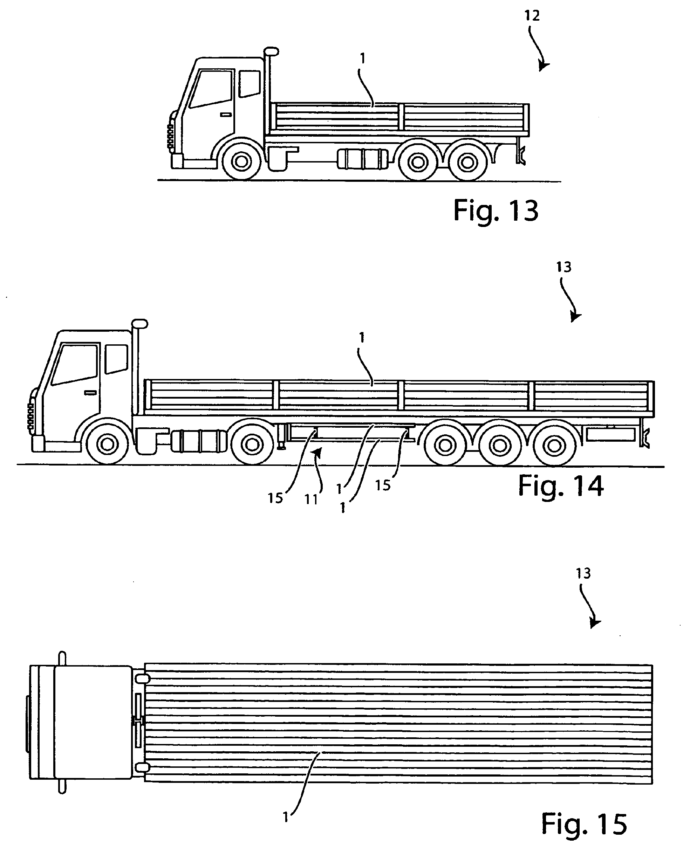

Figures 13-15 show application of bars 1 on a truck 12 and on a trailer 13 for realising side boards. It is noted in figure 14 that trailer 13 has a protection 11.

On the basis of the previous specification, it can be noted that basic feature of the present invention is a new combination of materials so as to obtain bars having better mechanical properties of dynamic and static resistance, and at the same time a better elasticity.

An advantage of the present invention is that steel section bar has the structural function of resistance to mechanical (dynamic and static) stresses, ensuring a rigid and stiff coupling with the structure. Furthermore, in view of the higher elastic limit with respect to aluminium, steel structural section bar is less subjected to permanent deformations in case of shocks or loads applied transversely.

Instead, outer plastic box-type body has the following advantages:
- it creates an obstacle to the goods to be contained or to the bodies that could violate the "shape" volume of the industrial vehicle;
- it distributes the load on the steel section bar; it protects the steel core with respect to weather;
- it gives a better aesthetical appearance, being it possible colouring its outer surface and easily modifying its shape;
- it is possible taking advantage of the anti-shock properties of plastic material.

A further advantage of the present invention is that of complying with the European Community safety requirement rule n° 89/297/EEC, in which, among the restraint imposed there are included: lack of sharp corners; limited deformation; fulfilment of assembling specifications.

Finally, another advantage of the invention is that, being plastics a less tough anti-shock material with respect to aluminium and steel, it has better anti-injury features, thus reducing damaging caused by a shock.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Safety bar (1), particularly for industrial vehicles (12, 13, 14), comprising
a metal section bar (2), and
a plastic material box-type body (3), said box-type body (3) having a seat (3"), realized along its main extension, within which said section bar (2) can be inserted,
**characterized in that**
said box-type body (3) further comprises two channels (3'), realized laterally with respect to said seat (3"), and
said bar comprises means (5, 6, 7) for coupling with supports, capable of being arranged within said seat (3").

2. Safety bar (1) according to claim 1, **characterized in that** said section bar (2) has a substantially "C" shaped section.

3. Safety bar (1) according to claim 1, **characterized in that** said section bar (2) has a substantially "Ω" shaped section

4. Safety bar (1) according to claim 1, **characterized in that** said section bar (2) has a substantially box-type section.

5. Safety bar (1) according to one of the preceding claims, **characterized in that** said box-type body (3) is realized by extrusion.

6. Safety bar (1) according to one of the preceding claims, **characterized in that** said plastic material is polypropylene.

7. Safety bar (1) according to one of the preceding claims 1 - 5, **characterized in that** said plastic material is polivinilchloride (PVC).

8. Safety bar (1) according to one of the preceding claims, **characterized in that** said section bar is comprised of zinc plated steel.

9. Safety bar (1) according to one of the preceding claims 1 - 7, **characterized in that** said section bar is comprised of stainless steel.

10. Safety bar (1) according to one of the preceding claims, **characterized in that** said bar has a slot (4) extending along its main direction, said slot (4) permitting application of said means for coupling with possible supports (5, 6, 7) to said section bar (2).

11. Safety bar (1) according to claim 10, **characterized in that** said means for coupling with supports comprise a small block (5), to be inserted within said section bar (2), having a seat in which the head of a screw (6) and a washer (7) can be placed, said screw (6) projecting from said slot (4) when said small block (5) is inserted in said section bar (2).

12. Safety bar (1) according to one of the preceding claims, **characterized in that** said bar has holes, said holes permitting application of said means for coupling with possible supports (5, 6, 7) to said section bar (2).

13. Safety bar (1) according to claim 12, **characterized in that** said means for coupling with supports comprise a small block (5), to be inserted within said section bar (2), having a seat in which the head of a screw (6) and a washer (7) can be placed, said screw (6) projecting from said slot (4) when said small block (5) is inserted in said section bar (2).

14. Use of a bar (1) according to claims 1 - 13, for realizing side boards or structures for bodies for containing goods to e transported by said industrial vehicles (12, 13, 14).

15. Lateral protection (11) for an industrial vehicle (12, 13, 14) comprising at least one upright (15), with a plurality of slots (16) along a surface; a bracket (18) that can be coupled with said at least one upright (15), in correspondence of one of its ends, and with the frame of said industrial vehicle (12, 13, 14); and one or more bars coupled with said at least one upright (15) through said slots (16), said one or more bars being provided laterally with respect to said industrial vehicle (12, 13, 14) toward its longitudinal direction and each other substantially parallel, so as to obstruct the empty space under said industrial vehicle (12, 13, 14), **characterized in that** said one or more bar (1) are as defined in claims 1 - 13.

16. Lateral protection (11) according to claim 15, **characterized in that** said one or more bars (1) are coupled with said at least one upright (15) by coupling means (5, 6, 7).

17. Lateral protection (11) according to claim 15 or 16, **characterized in that** it comprises two uprights (15).

18. Lateral protection (11) according to one of the preceding claims 15 - 17, **characterized in that** said brackets (18) are fixed to said vehicle (12, 13, 14) by a pair of screws (28) and nuts.

19. Lateral protection (11) according to one of the preceding claims 15 - 18, **characterized in that** the position of said at least one upright (15) and the corresponding bracket (18) can be adjusted

## Patentansprüche

1. Sicherheitsstange (1), insbesondere für Industriefahrzeuge (12, 13, 14), umfassend:
eine Metallprofilstange (2), und
einen Kunststoffmaterial-Boxtyp-Körper (3), wobei der Boxtyp-Körper (3) eine Aufnahme (3") aufweist, die entlang seiner Hauptausdehnung gebildet ist und in welche die Profilstange (2) eingeführt werden kann,
**dadurch gekennzeichnet, dass**
der Boxtyp-Körper (3) weiterhin zwei Kanäle (3') umfasst, die lateral in Bezug auf die Aufnahme (3") gebildet sind, und
die Stange Mittel (5, 6, 7) zur Verbindung mit Trägern umfasst, die geeignet sind, in der Aufnahme (3") angeordnet zu werden.

2. Sicherheitsstange (1) gemäß Anspruch 1, **dadurch gekennzeichnet, dass** die Profilstange (2) einen im Wesentlichen "C"-förmigen Querschnitt aufweist.

3. Sicherheitsstange (1) gemäß Anspruch 1, **dadurch gekennzeichnet, dass** die Profilstange (2) einen im Wesentlichen "Ω"-förmigen Querschnitt aufweist.

4. Sicherheitsstange (1) gemäß Anspruch 1, **dadurch gekennzeichnet, dass** die Profilstange (2) einen im Wesentlichen Box-artigen Querschnitt aufweist.

5. Sicherheitsstange (1) gemäß einem der vorhergehenden Ansprüche, **dadurch gekennzeichnet, dass** der Boxtyp-Körper (3) durch Extrusion gebildet ist.

6. Sicherheitsstange (1) gemäß einem der vorhergehenden Ansprüche, **dadurch gekennzeichnet, dass** das Kunststoffmaterial Polypropylen ist.

7. Sicherheitsstange (1) gemäß einem der vorhergehenden Ansprüche 1 bis 5, **dadurch gekennzeichnet, dass** das Kunststoffmaterial Polyvinylchlorid (PVC) ist.

8. Sicherheitsstange (1) gemäß einem der vorhergehenden Ansprüche, **dadurch gekennzeichnet, dass** die Profilstange mit Zink beschichteten Stahl umfasst.

9. Sicherheitsstange (1) gemäß einem der vorhergehenden Ansprüche 1 bis 7, **dadurch gekennzeichnet, dass** die Profilstange Edelstahl umfasst.

10. Sicherheitsstange (1) gemäß einem der vorhergehenden Ansprüche, **dadurch gekennzeichnet, dass** die Stange einen Schlitz (4) aufweist, der sich entlang von deren Hauptrichtung erstreckt, wobei der Schlitz (4) den Einsatz der Mittel zur Verbindung mit möglichen Trägern (5, 6, 7) mit der Profilstange (2) erlaubt.

11. Sicherheitsstange (1) gemäß Anspruch 10, **dadurch gekennzeichnet, dass** die Mittel zur Verbindung mit Trägern einen kleinen Block (5) umfassen, der in die Profilstange (2) einzusetzen ist und eine Aufnahme aufweist, in welche der Kopf einer Schraube (6) und eine Scheibe (7) platziert werden können, wobei die Schraube (6) von dem Schlitz (4) vorragt, wenn der kleine Block (5) in die Profilstange (2) eingesetzt ist.

12. Sicherheitsstange (1) gemäß einem der vorhergehenden Ansprüche, **dadurch gekennzeichnet, dass** die Stange Löcher aufweist, wobei die Löcher den Einsatz der Mittel zur Verbindung mit möglichen Trägern (5, 6, 7) in die Profilstange (2) erlauben.

13. Sicherheitsstange (1) gemäß Anspruch 12, **dadurch gekennzeichnet, dass** die Mittel zur Verbindung mit Trägern einen kleinen Block (5) umfassen, der in die Profilstange (2) einzusetzen ist und eine Aufnahme aufweist, in welcher der Kopf einer Schraube (6) und eine Scheibe (7) platziert werden können, wobei die Schraube (6) von dem Schlitz (4) vorragt, wenn der kleine Block (5) in die Profilstange (2) eingesetzt ist.

14. Verwendung einer Stange (1) gemäß einem der Ansprüche 1 bis 13 zur Realisierung von Seitenregalen oder Strukturen für Körper zur Aufnahme von Waren, die mit den Industriefahrzeugen (12, 13, 14) transportiert werden sollen.

15. Lateralschutz (11) für ein Industriefahrzeug (12, 13, 14), umfassend mindestens einen Ständer (15) mit einer Vielzahl von Schlitzen (16) entlang einer Oberfläche; eine Klammer (18), die mit dem mindestens einen Ständer (15) in Entsprechung mit einem von seinen Enden und mit dem Rahmen des Industriefahrzeugs (12, 13, 14) verbunden werden kann; und eine oder mehrere Stangen, die mit dem mindestens einen Ständer (15) durch die Schlitze (16) verbunden sind, wobei die eine oder mehreren Stangen lateral in Bezug auf das Industriefahrzeug (12, 13, 14) hin zu seiner Längsrichtung und zueinander im Wesentlichen parallel bereitgestellt sind, um so den leeren Raum unter dem Industriefahrzeug (12, 13, 14) zu verbauen, **dadurch gekennzeichnet, dass** die eine oder mehreren Stangen (1) so wie in den Ansprüchen 1 bis 13 gebildet sind.

16. Lateralschutz (11) gemäß Anspruch 15, **dadurch gekennzeichnet, dass** die eine oder mehreren Stangen (1) mit dem mindestens einen Ständer (15) durch Verbindungsmittel (5, 6, 7) verbunden sind.

17. Lateralschutz (11) gemäß Anspruch 15 oder 16, **dadurch gekennzeichnet, dass** er zwei Ständer (15) umfasst.

18. Lateralschutz (11) gemäß einem der vorhergehenden Ansprüche 15 bis 17, **dadurch gekennzeichnet, dass** die Klammern (18) durch ein Paar von Schrauben (28) und Muttern an dem Fahrzeug (12, 13, 14) fixiert sind.

19. Lateralschutz (11) gemäß einem der vorhergehenden Ansprüche 15 bis 18, **dadurch gekennzeichnet, dass** die Position des mindestens einen Ständers (15) und der entsprechenden Klammer (18) justiert werden kann.

## Revendications

1. Barre de sécurité (1), en particulier pour des véhicules industriels (12, 13, 14), comprenant :
une barre de section métallique (2), et
un corps de type boîtier en matière plastique (3), ledit corps de type boîtier (3) comprenant une assise (3"), réalisée le long de son extension principale, dans laquelle ladite barre de section (2) est insérée,
**caractérisée en ce que**
ledit corps de type boîtier (3) comprend en outre deux canaux (3') réalisés latéralement par rapport à ladite assise (3"), et
ladite barre comprend un moyen (5, 6, 7) de couplage avec des supports, pouvant être agencé dans ladite assise (3").

2. Barre de sécurité (1) selon la revendication 1, **caractérisée en ce que** ladite barre de section (2) présente une section sensiblement en forme de « C ».

3. Barre de sécurité (1) selon la revendication 1, **caractérisée en ce que** ladite barre de section (2) présente une section sensiblement en forme de « Ω ».

4. Barre de sécurité (1) selon la revendication 1, **caractérisée en ce que** ladite barre de section (2) présente une section sensiblement de type boîtier.

5. Barre de sécurité (1) selon l'une des revendications précédentes, **caractérisée en ce que** ledit corps de type boîtier (3) est réalisé par extrusion.

6. Barre de sécurité (1) selon l'une des revendications précédentes, **caractérisée en ce que** ladite matière plastique est du polypropylène.

7. Barre de sécurité (1) selon l'une des revendications 1 à 5, **caractérisée en ce que** ladite matière plastique est du polychlorure de vinyle (PVC).

8. Barre de sécurité (1) selon l'une des revendications précédentes, **caractérisée en ce que** ladite barre de section est constituée d'acier plaqué de zinc.

9. Barre de sécurité (1) selon l'une des revendications précédentes 1 à 7, **caractérisée en ce que** ladite barre de section est constituée d'acier inoxydable.

10. Barre de sécurité (1) selon l'une des revendications précédentes, **caractérisée en ce que** ladite barre présente une fente (4) s'étendant le long de sa direction principale, ladite fente (4) permettant l'application dudit moyen de couplage éventuellement avec des supports (5, 6, 7) à ladite barre de section (2).

11. Barre de sécurité (1) selon la revendication 10, **caractérisée en ce que** ledit moyen de couplage avec des supports est constitué d'un petit bloc (5), à insérer dans ladite barre de section (2), présentant une assise dans laquelle la tête d'une vis (6) et une rondelle (7) peuvent être placées, ladite vis (6) faisant saillie depuis ladite fente (4) lorsque ledit petit bloc (5) est inséré dans ladite barre de section (2).

12. Barre de sécurité (1) selon l'une des revendications précédentes, **caractérisée en ce que** ladite barre comporte des trous, lesdits trous permettant l'application dudit moyen de couplage avec d'éventuels supports (5, 6, 7) à ladite barre de section (2).

13. Barre de sécurité (1) selon la revendication 12, **caractérisée en ce que** ledit moyen de couplage avec des supports est constitué d'un petit bloc (5), à insérer dans ladite barre de section (2), présentant une assise dans laquelle la tête d'une vis (6) et une rondelle (7) peuvent être placées, ladite vis (6) faisant saillie depuis ladite fente (4) lorsque ledit petit bloc (5) est inséré dans ladite barre de section (2).

14. Utilisation d'une barre (1) selon les revendications 1 à 13, pour réaliser des ridelles ou structures latérales pour des corps contenant des produits devant être transportés par lesdits véhicules industriels (12, 13, 14).

15. Protection latérale (11) pour un véhicule industriel (12, 13, 14) constitué au moins d'un montant (15), présentant une pluralité de fentes (16) le long d'une surface ; un support (18) pouvant être couplé audit au moins un montant (15), de façon à correspondre à l'une de ses extrémités, et au châssis dudit véhicule industriel (12, 13, 14) ; et une ou plusieurs barres couplées avec ledit au moins un montant (15) à travers lesdites fentes (16), lesdites au moins une ou plusieurs barres étant disposées latéralement par rapport audit véhicule industriel (12, 13, 14) vers sa direction longitudinale et sensiblement parallèles les unes aux autres, de manière à obstruer l'espace vide sous ledit véhicule industriel (12, 13, 14), **caractérisée en ce que** lesdites une ou plusieurs barres (1) sont telles que définies dans les revendications 1 à 13.

16. Protection latérale (11) selon la revendication 15, **caractérisée en ce que** lesdites une ou plusieurs barres (1) sont couplées avec ledit au moins un montant (15) à l'aide du moyen de couplage (5, 6, 7).

17. Protection latérale (11) selon la revendication 15 ou 16, **caractérisée en ce qu'**elle est constituée de deux montants (15).

18. Protection latérale (11) selon l'une des revendications précédentes 15 à 17, **caractérisée en ce que** lesdits supports (18) sont fixés audit véhicule (12, 13, 14) à l'aide d'une paire de vis (28) et de boulons.

19. Protection latérale (11) selon l'une des revendications précédentes 15 à 18, **caractérisée en ce que** la position dudit au moins un montant (15) et le support correspondant (18) peuvent être ajustés.
